# EUROPÄISCHE PATENTSCHRIFT

(11) **EP 1 122 117 B1**
(45) Veröffentlichungstag und Bekanntmachung des Hinweises auf die Patenterteilung: **07.11.2007**
(21) Anmeldenummer: 01101178.0
(22) Anmeldetag: 24.01.2001
(51) Int. Cl.: B60L 15/20, B60L 1/00, B60K 25/00, B60K 25/02

(54) **Verfahren zur Leistungsbereitstellung für Nebenverbraucher in elektrischen Antriebssystemen und elektrisches Antriebssystem**
Method for providing power to auxiliary devices in electrical drive systems and electrical drive system
Méthode pour fournir de la puissance pour des dispositifs auxiliaires dans des systèmes d'entraînement électrique et système d'entraînement électrique

(30) Priorität: 31.01.2000 DE 10004051
(43) Veröffentlichungstag der Anmeldung: 08.08.2001
(73) Patentinhaber: Voith Turbo GmbH & Co. KG, 89522 Heidenheim (DE)
(72) Erfinder: Mühlberger, Uwe, 89522 Heidenheim (DE); Angerer, Wolfram, 89518 Heidenheim (DE)
(74) Vertreter: Dr. Weitzel & Partner

(56) Entgegenhaltungen:
- EP-A- 0 759 371
- EP-A- 0 796 758
- DE-A- 19 729 550
- JP-A- 11 235 925
- US-A- 4 500 819
- US-A- 5 986 416

## Beschreibung

Die Erfindung betrifft ein Verfahren zur Leistungsbereitstellung für Nebenaggregate in elektrischen Antriebssystemen, im einzelnen mit den Merkmalen aus dem Oberbegriff des Anspruches 1; ferner ein elektrisches Antriebssystem.

Ferner eine Steuereinrichtung für ein elektrisches Antriebssystem und ein elektrisches Antriebssystem.

Elektrische Antriebssysteme für den Einsatz in Straßenfahrzeugen sind in verschiedenen Ausführungen bekannt. Dabei erfolgt die Bereitstellung der an den Rädern erforderlichen Leistung über eine elektrische Maschine, die im Traktionsbetrieb, das heißt bei Leistungsübertragung von der Antriebsmaschine zu den Rädern, als Elektromotor arbeitet. Die Bereitstellung der elektrischen Leistung erfolgt dabei durch Kopplung mit einer Energiequelle, welche beispielsweise in Form einer Elektrospeichereinrichtung, einer Brennstoffzelle oder einer Oberleitung ausgebildet sein kann. Bei Vorsehen von Nebenverbrauchem im Antriebssystem werden diese über einen zusätzlichen Elektromotor mit konstanter Drehzahl beziehungsweise mittels Umrichter geregelt über ein Verteilergetriebe angetrieben. Der Einsatz derartiger Elektromotoren hat jedoch den Nachteil eines schlechteren Wirkungsgrades im Vergleich zu einer Transversalflußmaschine. Des weiteren können wegen der hohen Laufleistung keine preiswerten Komutatormaschinen für diese Funktion eingesetzt werden. Das Document US5986416 beschreibt einem batteriegespeisten Gleichstromantrieb mit dem Neundaten 2005, 72-144V,6000 1/min.

Der Erfindung liegt daher die Aufgabe zugrunde, ein Verfahren zur Leistungsbereitstellung für die Nebenverbraucher in einem elektrischen Antriebssystem und das elektrische Antriebssystem derart weiterzuentwickeln, daß die genannten Nachteile vermieden werden. Im einzelnen soll die Leistungsübertragung beziehungsweise Bereitstellung mit einem hohen Wirkungsgrad erfolgen und der Einsatz preiswerter Antriebsmaschinen für den Nebenverbraucher ermöglicht werden.

Die erfindungsgemäße Lösung ist durch die Merkmale der Ansprüche 1 und 4 charakterisiert. Vorteilhafte Ausgestaltungen sind in den Unteransprüchen wiedergegeben.

Das elektrische Antriebssystem für den Einsatz an Fahrzeugen weist wenigstens einen, als Fahrmotor fungierenden Elektromotor auf, welcher durch eine Energiequelle speisbar ist und wenigstens eine elektrische Maschine zur Leistungsbereitstellung für die Nebenverbraucher. Erfindungsgemäß ist vorgesehen, daß in Abhängigkeit einer zu einem bestimmten Zeitpunkt an den Rädern geforderten abnehmbaren Leistung der Antrieb der Nebenverbraucher entweder über den als Fahrmotor fungierenden Elektromotor oder die zur Leistungsbereitstellung der Nebenverbraucher vorgesehene elektrische Maschine erfolgt. Dabei werden im wesentlichen zwei Fälle unterschieden. Für den Fall, daß die Summe aus der an den Rädern abnehmbaren erforderlichen Antriebsleistung und der Summe der erforderlichen Leistung zum Betreiben der Nebenaggregate zu einem bestimmten Zeitpunkt t geringer ist, als die theoretisch maximal mögliche Gesamtfahrleistung, das heißt die vom als Fahrmotor fungierenden Etektromotor bereitstellbare Leistung, erfolgt der Antrieb der Nebenverbraucher über den als Fahrmotor fungierenden Elektromotor. Im anderen Fall, das heißt die durch den Fahrerwunsch bedingte an den Rädern bereitzustellende Leistung, welche einer bestimmten vom Elektromotor abzugebenden Leistung entspricht und die Summe der für den Betrieb der Nebenaggregate erforderlichen Leistung überschreitet die theoretisch maximal mögliche aufbringbare Gesamtleistung vom Elektromotor, wird der Antrieb der Nebenverbraucher von der diesen zugeordneten elektrischen Maschine übernommen. Die elektrische Maschine ist dabei als Komutatormaschine ausgeführt. Durch die erfindungsgemäße Lösung des wahlweisen Antriebes über den Fahrmotor oder einer, lediglich zum Antrieb der Nebenverbraucher vorgesehenen elektrischen Maschine wird die Möglichkeit bereit gestellt, die als Komutatormaschine ausgebildete elektrische Maschine nur dann zu betreiben, wenn das Fahrzeug anhält beziehungsweise in den Zuständen, wenn sehr hohe Fahrleistungen gefordert werden. Dabei wird nach dem Anfahren ab einer bestimmten Drehzahl des Fahrmotors von diesem der Antrieb der Nebenverbraucher übernommen. Diese Lösung bietet den Vorteil, daß die nur für den Antrieb der Nebenverbraucher verwendete bzw. verwendeten Komutatormaschinen mit schlechterem Wirkungsgrad hinsichtlich ihrer Betriebsweise über die gesamte Betriebsdauer des Antriebssystems begrenzt eingesetzt werden und somit die Zustände der Leistungsübertragung mit schlechterem Wirkungsgrad möglichst gering gehalten werden.

Unter einem weiteren Aspekt der Erfindung wird vorzugsweise die Möglichkeit der Variation der erforderlichen bereitzustellenden Leistung für den Nebenverbraucher zu einem bestimmten Zeitpunkt t mit berücksichtigt. Dies bietet den Vorteil der Möglichkeit des Einsatzes von jedem Verbraucher mit lediglich nur zeitweiser Betriebsweise während der gesamten Betriebsdauer im Antriebssystem.

Verfahrensmäßig wird dabei zu einem bestimmten Zeitpunkt wenigstens eine, den aktuellen Fahrerwunsch nach einer an den Rädern abzugebenden Leistung wenigstens mittelbar charakterisierende Größe ermittelt und einer Steuereinrichtung zur weiteren Verarbeitung zugeführt. Als den aktuellen Fahrerwunsch wenigstens mittelbar charakterisierende Größe kann dabei beispielsweise die Pedalstellung und/oder die Geschwindigkeit der Pedalbewegung verwendet werden. Beim Einsatz von Nebenverbrauchem im Antriebssystem, deren ständige Betriebsweise gewünscht wird, genügt als zu verarbeitende Größe lediglich die den aktuellen Fahrerwunsch charakterisierende Größe. Im anderen Fall, das heißt bei gewünschter nur zeitweiser Betriebsweise der Nebenaggregate ist deren Betätigung mit zu berücksichtigen. Die Steuereinrichtung verarbeitet diese Eingangsgrößen und führt einen Vergleich zwischen der Summe aus der gemäß dem aktuellen Fahrerwunsch resultierenden bereitzustellenden Leistung zu einem Zeitpunkt t und der für den Nebenverbraucher erforderlichen Leistung mit der theoretisch maximal möglichen bereitstellbaren Leistung durch den Fahrmotor durch. Für den Fall, daß die Summe die maximal theoretisch möglich bereitzustellende Fahrleistung nicht überschreitet, erfolgt der Antrieb der Nebenverbraucher mit über den Fahrmotor. Dies wird durch Leistungsteilung realisiert. Ein erster Leistungsanteil wird dabei den Rädern zugeführt, während der zweite Leistungsanteil sich auf die einzelnen Nebenverbraucher aufteilt. Im zweiten Fall, das heißt überschreitet die ermittelte Summe die theoretisch maximal möglich bereitzustellende Leistung am Fahrmotor, erfolgt der Antrieb der Nebenverbraucher über eine, speziell zum Antrieb der Nebenverbraucher vorgesehene elektrische Maschine. Des weiteren erfolgt der Antrieb der Nebenverbraucher in den Betriebszuständen, welche durch den Stillstand des Fahrmotors charakterisiert sind, ebenfalls über die den Nebenverbrauchem zugeordnete elektrische Maschine.

Vorrichtungsmäßig ist eine Steuereinrichtung vorgesehen, welche wenigstens einen funktionalen und physischen Eingang und Ausgang aufweist. Der Eingang ist dabei mit einer Einrichtung zur Vorgabe eines Fahrerwunsches nach einer bestimmten an den Rädern abzugebenden Leistung gekoppelt. Diesen wird wenigstens eine, den aktuellen Fahrerwunsch nach einer bestimmten abzugebenden Leistung charakterisierende Größe zugeführt. Die Steuereinrichtung umfaßt des weiteren eine Vergleichs- beziehungsweise Ermittlungseinrichtung, die die Summe aus der aktuell gewünschten zu einem bestimmten Zeitpunkt aufzubringenden Leistung und der erforderlichen Gesamtleistung für die Nebenverbraucher mit der theoretisch maximal möglichen aufbringbaren Leistung des als Fahrmotor fungierenden Elektromotors vergleicht. Entsprechend des Vergleichsergebnisses wird am Ausgang oder an Ausgängen jeweils wenigstens eine Stellgröße zur Ansteuerung einer Einrichtung zur wahlweisen Kopplung des Fahrmotors oder der elektrischen Antriebsmaschine mit den Nebenverbrauchern gebildet. Je nach Ausführung der Mittel zur Realisierung der wahlweisen Kopplung zwischen dem Fahrmotor und den Nebenverbrauchern sowie der elektrischen Maschine und den Nebenverbrauchern ist lediglich eine Stelleinrichtung oder aber eine Vielzahl von Stelleinrichtungen erforderlich, welche über den Ausgang oder die Ausgänge angesteuert werden.

Unter einem weiteren Aspekt der Erfindung wird als Fahrmotor eine elektrische Maschine in Form einer Transversalflußmaschine verwendet. Diese bietet den Vorteil einer sehr hohen Leistungsdichte und eines guten Wirkungsgrades.

Vorrichtungsmäßig sind dazu dem Fahrmotor und der elektrischen Maschine eine Getriebebaueinheit zugeordnet, mittels welcher eine wahlweise Kopplung mit den Nebenverbrauchern realisiert werden kann. Die Kopplung zwischen Fahrmotor und Nebenverbraucher sowie elektrischer Maschine und Nebenverbraucher ist dabei lösbar. Die Kopplung zwischen der elektrischen Antriebsmaschine und den Nebenverbrauchem ist ebenfalls lösbar gestaltet. Dies kann im einzelnen dadurch realisiert werden, daß der Kopplung zwischen Nebenverbraucher und Fahrmotor und Nebenverbraucher und elektrischer Antriebsmaschine jeweils eine Schalteinrichtung zugeordnet ist, wobei die Schalteinrichtungen jeweils in Abhängigkeit voneinander betätigt werden. Eine besonders vorteilhafte Ausgestaltung besteht darin, eine Schalteinrichtung in Form einer Doppelkupplung oder Schiebeschaltwelle vorzusehen, welche durch Verschieben des Schaltelementes eine drehfeste Kopplung zwischen dem Nebenverbraucher und einem der beiden Antriebselemente ermöglicht. Die Ausführung mit Schiebeschaltwelle bietet dabei den Vorteil, daß in dieser automatisch und zwangsläufig die Bindung der Betätigung der einen Einrichtung zur Koppelung zwischen Fahrmotor und Nebenverbraucher und der anderen Kopplung zwischen elektrischer Maschine und Nebenverbraucher erfolgt.
Die Getriebebaueinheit ist desweiteren zur Aufteilung an die Nebenverbraucher mit einer Verteilergetriebeeinheit koppelbar, mit deren Abtrieben die einzelnen Nebenverbraucher koppelbar sind. Das Verteilergetriebe kann auch in der Getriebebaueinheit integriert sein, d. h. nicht als separate Getriebeeinheit mit der Getriebebaueinheit gekoppelt sein sondern in einem gemeinsamen Gehäuse untergebracht werden. Vorzugsweise werden zusätzlich Mittel zur wahlweisen Kopplung jedes einzelnen Nebenverbrauchers mit den Abtrieben der Verteilergetriebeeinheit vorgesehen. Dies bietet den Vorteil, daß die einzelnen Nebenverbraucher auch unabhängig voneinander antreibbar sind. Getriebebaueinheit und Verteilergetriebeeinheit können dabei entweder als separete Baueinheiten gehandelt werden oder werden bereits in einer Baueinheit zusammengefaßt, was den Vorteil einer sehr kompakten und selbstständig handelbaren Einheit bietet.

Die erfindungsgemäße Lösung ist für jede Art von rein elektrischen Antriebssystemen einsetzbar. Dabei ist es unerheblich, wie die elektrische Leistung für den Fahrmotor bereitgestellt wird. Die Leistungsbereitstellung kann dabei über externe oder interne Energiequellen am Fahrzeug erfolgen. Denkbar sind dabei Ausführungen der Energiequelle als Brennstoffzelle, Energiespeichereinrichtung in Form von Batterien oder in Form einer sogenannten Oberleitung.

Für die Ausgestaltung der Getriebebaueinheiten und der einzelnen Schalteinrichtungen bestehen ebenfalls eine Vielzahl von Möglichkeiten. Die konstruktive Ausgestaltung und die Auslegung erfolgt entsprechend dem Einsatzerfordernis und liegt im Ermessen des zuständigen Fachmannes.

Ein wesentlicher Vorteil der erfindungsgemäßen Lösung besteht in einem erhöhten Gesamtwirkungsgrad des Antriebssystems und der nunmehr gegebenen Möglichkeit des Einsatzes von relativ einfachen und somit preiswerten Elektromotoren zum direkten Antrieb der Nebenverbraucher.

Unter einem weiteren Aspekt der Erfindung bei Verwendung einer Brennstoffzelle als Energiequelle kann der Elektromotor auch den für die Versorgung der Brennstoffzelle vorgesehenen Elektromotor ersetzen. In diesem Fall kann das Antriebssystem mit Brennstoffzellenantrieb besonders kompakt ausgestaltet werden.

Die erfindungsgemäße Lösung wird nachfolgend anhand einer Figur erläutert. Darin ist im einzelnen folgendes dargestellt:

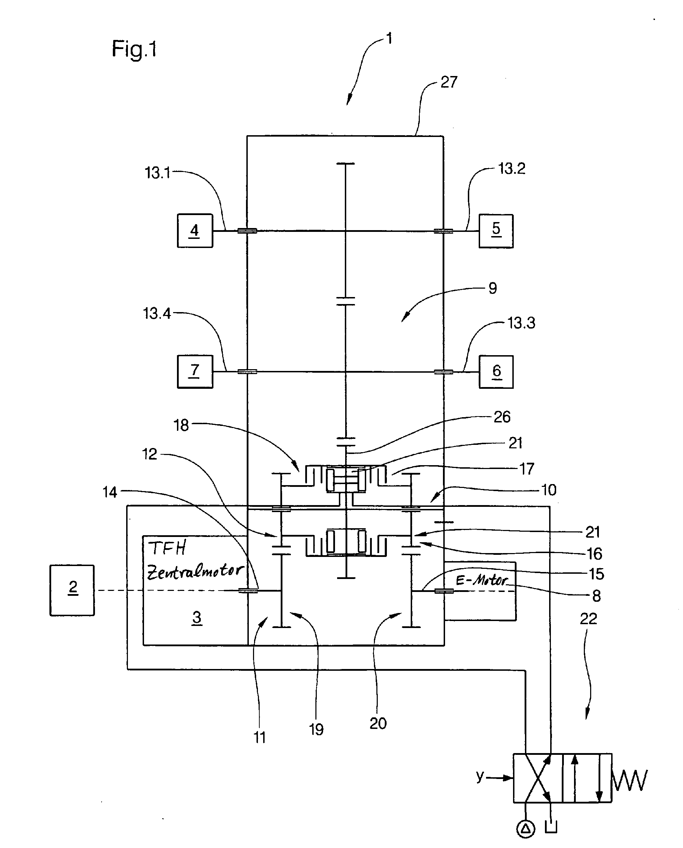

- Figur 1: verdeutlicht in schematisch vereinfachter Darstellung eine mögliche konstruktive Ausführung eines erfindungsgemäß gestalteten Antriebssystems zum Antrieb der Nebenverbraucher.

Die Figur 1 verdeutlicht in schematisch vereinfachter Darstellung eine mögliche Ausführungsform eines erfindungsgemäß gestalteten elektrischen Antriebssystems 1 für den Einsatz in Fahrzeugen. Dieses umfaßt wenigstens einen, aus einer Energiequelle 2 speisbaren Elektromotor 3, welcher wenigstens mittelbar mit den, hier nicht dargestellten anzutreibenden Rädern koppelbar ist. Der Elektromotor 3 fungiert dabei im Traktionsbetrieb, das heißt bei Leistungsübertragung von der Energiequelle 2 zu den Rädern als Antriebsmaschine. Vorzugsweise ist der Elektromotor 3 derart konzipiert, daß dieser in anderen Betriebsarten des Antriebssystems auch generatorisch betreibbar ist und die im generatorischen Betrieb erzeugbare Leistung vorzugsweise in eine Energiespeichereinrichtung einspeist. Das Antriebssystem umfaßt ferner wenigstens ein Nebenaggregat, vorzugsweise eine Vielzahl von Nebenaggregaten, welche zusätzliche Funktionen im Betrieb des Antriebssystems übernehmen können. Stellvertretend sind hier als Nebenaggregate in Form einer Blackbox eine Brennstoffzelle 4, welche auch als Energiequelle für die Antriebsmaschine 3 anstatt der Verbrennungskraftmaschine 2 fungieren kann, eine Lenkpumpe 5, ein Kompressor 6 und eine Lichtmaschine 7 vorgesehen. Den Nebenaggregaten ist eine elektrische Antriebsmaschine in Form eines Elektromotors 8, vorzugsweise in Form einer Komutatormaschine zugeordnet, welcher wenigstens mittelbar über eine Verteilergetriebeeinheit 9, die einzelnen Nebenaggregate antreiben kann. Erfindungsgemäß ist vorgesehen, die Nebenaggregate, hier die Nebenaggregate 5 bis 7, im Betrieb des Antriebssystems, vorzugsweise im Traktionsbetrieb, über den Elektromotor 3 anzutreiben. Zu diesem Zweck sind Mittel 10 zur wahlweisen Kopplung der einzelnen Nebenverbraucher 4, 5, 6, 7 mit der elektrischen Antriebsmaschine 8 oder dem als Fahrmotor fungierenden Elektromotor 3 vorgesehen. Im dargestellten Fall wird dies über eine Getriebebaueinheit 11 realisiert. Diese ist zwischen dem Elektromotor 3 und den Nebenaggregaten und dem Fahrmotor 3 angeordnet und weist wenigstens einen ersten Eingang 12 auf, der mit dem Elektromotor 3, insbesondere dessen Antriebswelle 14 drehfest verbindbar ist, einen zweiten Eingang 16, der mit der elektrischen Maschine 8, insbesondere dessen Antriebswelle 15 drehfest verbindbar ist, und wenigstens einen Ausgang 26 der mit dem Verteilergetriebeeinheit 9 verbunden ist. Das Verteilergetriebeeinheit 9 weist vorzugsweise eine Mehrzahl von Ausgängen, hier stellvertretend 13.1 bis 13.4 auf, die mit den Nebenverbrauchem 4 bis 7 verbindbar sind. Vorzugsweise sind entsprechend der Anzahl der anzutreibenden Nebenaggregate eine Mehrzahl von Ausgängen vorgesehen. Im dargestellten Fall sind diese Ausgänge mit 13.1 für die Brennstoffzelle 4, 13.2 für die Lenkpumpe 5, 13.3 für den Kompressor 6 und 13.4 für die Lichtmaschine 7 bezeichnet. Vorzugsweise bilden Getriebebaueinheit 11 und Verteilergetriebeeinheit 9 eine bauliche Einheit, d.h. sind in einem Gehäuse 27 angeordnet.

Es besteht desweiteren jedoch auch die hier im einzelnen nicht dargestellte Möglichkeit, einzelne Nebenaggregate in Reihe anzuordnen und diese drehfest mit dem Ausgang 26 der Getriebebaueinheit 11 zu verbinden.

Die an der Antriebswelle 14 des Elektromotors 3 abnehmbare Leistung wird dabei erfindungsgemäß entsprechend des Einsatzerfordernisses auf die einzelnen Nebenaggregate und den Abtrieb, das heißt, die hier nicht dargestellten anzutreibenden Räder übertragen. Zu diesem Zweck umfassen die Mittel 10 desweiteren eine Einrichtung 18 zur Lösung oder Herstellung einer Verbindung zwischen der Antriebswelle 14 des Elektromotors 3 und dem Eingang 12 und eine Einrichtung 17 zur Lösung oder Herstellung der Verbindung zwischen der Antriebswelle 15 der elektrischen Maschine 8 und der Getriebebaueinheit 11. Diese Einrichtungen 17 und 18 ermöglichen jedoch nur das vollständige Trennen aller Nebenaggregate von der jeweiligen Antriebsquelle oder erlauben den kompletten Durchtrieb zu den Nebenaggregaten. Zur wahlweisen Inbetriebnahme einzelner Nebenaggregate sind diesen jeweils hier nicht dargestellte Schaltelemente zugeordnet, die die wahlweise Versorgung der Nebenaggregate mit Leistung ermöglichen. Vorzugsweise ist dabei jedem der einzelnen Nebenaggregate, das heißt der Brennstoffzelle 4, der Lenkpumpe 5, dem Kompressor 6 und der Lichtmaschine 7 eine separate Schalteinrichtung zugeordnet.

Die Nebenaggregate, deren Funktion während der gesamten Betriebsphase des Fahrzeuges erforderlich ist, stehen ständig mit dem Hauptantrieb in Triebverbindung, das heißt diese sind mit dem Ausgang 26 der Getriebebaueinheit 11 ständig gekoppelt.

Die, den einzelnen Nebenaggregaten, hier beispielhaft der Brennstoffzelle 4, der Lenkpumpe 5, dem Kompressor 6 und der Lichtmaschine 7, zugeordnete elektrische Antriebsmaschine in Form eines Elektromotors 8 ist im dargestellten Fall über die Getriebebaueinheit 11 mit der Verteilergetriebeeinheit 9 gekoppelt. Die Antriebswelle 15 der elektrischen Antriebsmaschine 8 ist zu diesem Zweck mit einem weiteren zweiten Eingang 16 der Getriebebaueinheit 11 koppelbar. Zwischen dem Eingang 16 der Getriebebaueinheit 11 und der Antriebswelle 15 der elektrischen Maschine 8 ist eine Einrichtung 17 zur Realisierung der Verbindung oder der Lösung in Form eines Schaltelementes, beispielsweise einer Kupplung vorgesehen.

Für den Aufbau der Getriebebaueinheit 11 bestehen eine Vielzahl von Möglichkeiten. Vorzugsweise ist diese derart ausgeführt, daß bei Realisierung des Antriebes der Nebenaggregate, hier stellvertretend der Brennstoffzelle 4, der Lenkpumpe 5, dem Kompressor 6 und der Lichtmaschine 7 über den elektrischen Antriebsmotor 3, welcher vorzugsweise in Form einer Transversalflußmaschine ausgeführt ist, hinsichtlich der Drehzahl-/Drehmomentenwandlung in gleicher Weise auf die einzelnen Nebenaggregate aufteilt, wie wenn der Antrieb über die elektrische Antriebsmaschine 8 realisiert wird. Zur Kopplung zwischen der Antriebswelle des beim Einsatz in Antriebssystemen von Fahrzeugen als Fahrmotor fungierenden Elektromotors 3 mit der Getriebebaueinheit 11 ist die Einrichtung 18 zur Lösung oder Herstellung der Verbindung in Form einer Schalteinrichtung vorgesehen. Die Betätigung der Einrichtung 17 zur Lösung oder Herstellung der Verbindung zwischen der Antriebswelle der elektrischen Antriebsmaschine 8 und dem zweiten Eingang 16 der Getriebebaueinheit 11 und der Einrichtung 18 zur Lösung oder Herstellung der Verbindung zwischen der Antriebswelle 14 des als Fahrmotor beim Einsatz in Antriebssystemen für Fahrzeuge fungierenden Elektromotors 3 und des ersten Einganges 12 der Getriebebaueinheit 11 sind miteinander gekoppelt. Diese Kopplung kann steuerungstechnisch gelöst sein, wobei es sich dann bei den Einrichtungen 17 und 18 um eigenständige Einrichtungen handelt. Es besteht jedoch auch die Möglichkeit diese baulich miteinander zu koppeln, beispielsweise in Form einer Doppelkupplung 21, wie in Figur 1 dargestellt. Dabei werden im wesentlichen zwei Grundzustände unterschieden, ein erster Grundzustand, welcher dem Antrieb der Nebenaggregate über den als Fahrmotor fungierenden Elektromotor 3 entspricht und ein zweiter Grundzustand, in welchem die Nebenaggregate, beispielhaft die Brennstoffzelle 4, die Lenkpumpe 5, der Kompressor 6 und die Lichtmaschine 7 über die elektrische Antriebsmaschine 8 angetrieben werden. Die Kopplung der Betätigung der Einrichtung 18 zur Lösung oder Herstellung der Verbindung zwischen der Antriebswelle des als Fahrmotor fungierenden Elektromotors 3 und des ersten Einganges 12 der Getriebebaueinheit 11 ist somit an die Betätigung der Einrichtung 17 zur Lösung oder Herstellung der Verbindung zwischen der Antriebswelle der elektrischen Antriebsmaschine 8 und dem Eingang 16 der Getriebebaueinheit 11 gebunden. Dies bedeutet, daß bei hergestellter Verbindung zwischen der Antriebswelle des als Fahrmotor fungierenden Elektromotors 3 und dem ersten Eingang der Getriebebaueinheit 11 die Einrichtung 17 zur Herstellung oder Lösung der Verbindung zwischen der Antriebswelle der elektrischen Antriebsmaschine 8 und dem zweiten Eingang 16 der Getriebebaueinheit 11 gelöst ist. Im Umkehrschluß gilt, daß bei hergestellter Verbindung zwischen der Antriebswelle 15 der elektrischen Antriebsmaschine 8 und dem Eingang 16 der Getriebebaueinheit 11 die Einrichtung 18 gelöst ist.

Für die Ausgestaltung der Getriebebaueinheit 11 bestehen eine Vielzahl von Möglichkeiten. Vorzugsweise ist diese jedoch derart aufgebaut, daß die Leistungsübertragung von dem als Fahrmotor beim Einsatz in Antriebssystemen von Fahrzeugen fungierenden Elektromotor 3 mit der gleichen Drehzahl-/Drehmomentenwandlung vorgenommen wird, wie beim Antrieb über die elektrische Antriebsmaschine 8. Dies wird im einfachsten Fall dadurch realisiert, daß die gleichen Übertragungseinheiten verwendet werden, zu denen wahlweise der Elektromotor 3 oder die elektrische Antriebsmaschine 8 zuschaltbar sind. Im dargestellten Fall ist die Getriebebaueinheit 11 derart ausgeführt, daß jeweils über einen Eingangsstirnradsatz 19 beziehungsweise 20 eine Kopplung über die Doppelkupplung 21 mit dem Verteilergetriebe 9 vorgenommen wird. Andere Ausführungsmöglichkeiten sind ebenfalls denkbar.

Im einfachsten Fall erfolgt die Kopplung der Betätigung der Einrichtung 18 an die Betätigung der Einrichtung 17 durch Ausgestaltung der beiden Einrichtungen in Form einer Einrichtung als Doppelkupplung 21. In diesem Fall wird ein Kupplungselement somit wahlweise zur Kopplung zwischen als Fahrmotor fungierendem Elektromotor 3 und Getriebebaueinheit 11 beziehungsweise elektrische Antriebsmaschine 8 und Getriebebaueinheit 11 genutzt. Die Betätigung erfolgt in Abhängigkeit der aktuellen, zum Antrieb des Fahrzeuges im Antriebssystem erforderlichen Leistung zu einem bestimmten Zeitpunkt t₁. Die erforderliche Antriebsleistung an den Rädern beim Einsatz in Fahrzeugen ergibt sich dabei aus dem zu diesem Zeitpunkt t₁ aktuellen Fahrerwunsch. Wenigstens eine, diesen aktuellen Fahrerwunsch zu einem bestimmten Zeitpunkt t₁ nach einer bestimmten Antriebsleistung an den Rädern wenigstens mittelbar charakterisierende Größe wird dabei dem Eingang einer, hier im einzelnen nicht dargestellten, Steuereinrichtung zugeführt. Die Steuereinrichtung umfaßt dabei eine Auswert- oder Vergleichseinrichtung, welche aus der Summe aus der dem aktuellen Fahrerwunsch zu einem bestimmten Zeitpunkt t₁ entsprechenden Leistung und der erforderlichen Gesamtleistung, welche sich aus den erforderlichen zur Verfügung stellenden Leistungsanteilen für die einzelnen Nebenverbraucher, hier die Lenkpumpe 5, der Kompressor 6 und die Lichtmaschine 7 ergibt und diese mit der theoretisch maximal mit der als Fahrmotor fungierenden elektrischen Antriebsmaschine aufbringbaren Leistung vergleicht. Daher werden im wesentlichen drei Grundzustände unterschieden, entweder die Summe aus der sich aus dem aktuellen Fahrerwunsch ergebenden geforderten Leistung und der den Nebenverbrauchern zuführbaren Leistung ist kleiner als die theoretische maximal vom als Fahrmotor fungierenden Elektromotor 3 bereitzustellenden Leistung, die Summe ist größer oder gleich. Entsprechend des Vergleichsergebnisses wird an der Steuereinrichtung eine Stellgröße Y gebildet, welche einem Ausgang zuführbar ist, der mit der Stelleinrichtung 22 zur Betätigung der Einrichtung 18 und/oder einer Stelleinrichtung 22 der Einrichtung 17 gekoppelt ist. Bei Ausführung der Einrichtung 17 und 18 in Form von zwei separaten Schalteinrichtungen, welche lediglich hinsichtlich ihrer Betätigung miteinander gekoppelt sind, ist jeder Einrichtung eine separate Stelleinrichtung zugeordnet. Die Bildung der Stellgrößen Y zur Ansteuerung der Stelleinrichtung 22 erfolgt dabei derart, daß entweder die Stelleinrichtung 22 der Einrichtung 17 derart betätigt wird, daß eine Verbindung zwischen der Antriebswelle des als Fahrmotor fungierenden Elektromotors 3 und dem Eingang 12 der Getriebebaueinheit 11 gegeben ist und gleichzeitig die Verbindung zwischen der elektrischen Antriebsmaschine 8 und dem Eingang 16 der Getriebebaueinheit 11 gelöst ist. Bei Ausführung als Doppelkupplung 21 genügt die Ausgabe einer Stellgröße und damit ein Ausgang, welche eine Stelleinrichtung 22 ansteuert. In diesem Fall kann beispielsweise die wahlweise Kopplung zwischen Elektromotor 3 und Getriebebaueinheit 11 sowie elektrischer Antriebsmaschine 8 und Getriebebaueinheit 11 über eine Schiebeschaltwelle realisiert werden, wobei das Schiebeschaltelement mit dem entsprechenden Verbindungselement der Einrichtung 17 oder der Einrichtung 18 in Eingriff bringbar ist.

Für die konkrete konstruktive Ausgestaltung des Antriebssystems 1, insbesondere der Elemente zur Realisierung der wahlweisen Kopplung und damit der Realisierung des wahlweisen Antriebes der Nebenverbraucher über die elektrische Antriebsmaschine 8 oder den als Fahrmotor fungierenden Elektromotor 3 bestehen eine Vielzahl von Möglichkeiten. Die konkrete Auslegung erfolgt entsprechend den aktuellen Einsatzerfordernissen und liegt im Ermessen des zuständigen Fachmannes.

### Bezugszeichenliste

- 1: Antriebssystem
- 2: Energiequelle
- 3: Elektromotor
- 4: Nebenaggregat, Brennstoffzelle
- 5: Nebenaggregat, Lenkpumpe
- 6: Nebenaggregat, Kompressor
- 7: Nebenaggregat, Lichtmaschine
- 8: Elektrische Antriebsmaschine
- 9: Verteilergetriebeeinheit
- 10: Mittel zur wahlweisen Kopplung der einzelnen Nebenverbraucher mit der elektrischen Antriebsmaschine oder dem als Fahrmotor fungierenden Elektromotor
- 11: Getriebebaueinheit
- 12: erster Eingang der Getriebebaueinheit
- 13.1-13.4: Ausgang der Verteilergetriebeeinheit
- 14: Antriebswelle des Elektromotors 3
- 15: Antriebswelle der elektrischen Maschine 8
- 16: zweiter Eingang der Getriebebaueinheit
- 17: Einrichtung zur Lösung oder Herstellung einer Verbindung zwischen der Antriebswelle 15, der elektrischen Maschine 8 und dem zweiten Eingang 16 der Getriebebaueinheit 11
- 18: Einrichtung zur Lösung oder Herstellung der Verbindung zwischen der Antriebswelle 14 des Elektromotors 3 und dem Eingang 11 der Getriebebaueinheit 11
- 19: Stimradsatz
- 20: Stimradsatz
- 21: Doppelkupplung
- 22: Stelleinrichtung

## Patentansprüche

1. Verfahren zur Leistungsbereitstellung für Nebenverbraucher (4, 5, 6, 7) in einem Antriebssystem (1) für den Einsatz in Fahrzeugen, umfassend wenigstens einen, als Fahrmotor zum wenigstens mittelbaren Antrieb wenigstens eines Rades fungierenden Elektromotor (3), welcher wenigstens mittelbar mit einer Energiequelle (2) koppelbar ist und eine elektrische Maschine (8), welche mit den Nebenverbrauchern (4, 5, 6, 7) koppelbar ist; **gekennzeichnet durch** die folgenden Merkmale:
die Leistungsbereitstellung für die Nebenverbraucher (4, 5, 6, 7) erfolgt in Abhängigkeit der zu einem bestimmten Zeitpunkt an den Rädern erforderlichen abzunehmenden Leistung;
nur im Stillstand des Fahrzeuges oder in einem Betriebszustand, in welchem zu einem bestimmten Zeitpunkt die Summe aus der theoretisch an den Rädern geforderten abzunehmenden Leistung und den zu diesem Zeitpunkt in Betrieb befindlichen Nebenverbrauchern (4, 5, 6, 7) geforderten Leistung größer ist als die zu diesem Zeitpunkt theoretisch von dem als Fahrmotor fungierenden Elektromotor (3) aufbringbaren Gesamtleistung werden die Nebenverbraucher (4, 5, 6, 7) über die elektrische Antriebsmaschine (8) angetrieben;
die Berücksichtigung der von den Nebenverbrauchem. (4, 5, 6, 7) geforderten Leistung erfolgt **dadurch**, dass ein Festwert für die erforderliche Leistung zum Antrieb aller Nebenverbraucher (4, 5, 6, 7) gebildet wird, welcher für jeden Zeitpunkt der Beurteilung gilt.

2. Verfahren nach Anspruch 1, **gekennzeichnet durch** die folgenden Merkmale:
bei welchem zu dem bestimmten Zeitpunkt wenigstens eine den aktuellen Fahrerwunsch nach einer an den Rädern abzugebenden Leistung wenigstens mittelbar charakterisierende Größe ermittelt wird und aus dieser die theoretisch für diesen Zweck bereitzustellende Leistung **durch** den als Fahrmotor fungierenden Elektromotor (3) gebildet wird;
bei welchem jeweils eine, dem gewünschten Betriebszustand eines Nebenverbrauchers (4, 5, 6, 7) wenigstens mittelbar charakterisierende Größe erfasst wird und aus dieser die theoretisch zum Antrieb dieses Nebenverbrauchers erforderlichen Leistung ermittelt wird;
bei welchem die Summe aus der zum bestimmten Zeitpunkt an den Rädern erforderlichen bereitzustellenden Leistung und der theoretisch zum Antrieb jedes einzelnen Nebenverbrauchers (4, 5, 6, 7) erforderlichen bereitzustellenden Leistung zu einer theoretischen erforderlichen Gesamtleistung gebildet wird und mit der zu diesem bestimmten Zeitpunkt maximal möglichen abgebbaren Leistung des als Fahrmotor fungierenden Elektromotors (3) verglichen wird.

3. Verfahren nach einem der Ansprüche 1 oder 2, **dadurch gekennzeichnet, daß** die Betriebsweise jedes einzelnen Nebenverbrauchers (4, 5, 6, 7) fortlaufend überwacht wird.

4. Antriebssystem (1) für den Antrieb wenigstens eines Rades für den Einsatz in Fahrzeugen;
mit einem, mit wenigstens einem anzutreibenden Rad wenigstens mittelbar verbundenen Elektromotor (3), welcher wenigstens mittelbar mit einer Energiequelle (2) koppelbar ist;
mit wenigstens einem Nebenverbraucher (4, 5, 6, 7);
mit wenigstens einer elektrischen Antriebsmaschine (8), welche mit den einzelnen Nebenverbrauchern (4, 5, 6, 7) wenigstens mittelbar verbindbar ist;
mit Mitteln (10) zur wahlweisen Kopplung der einzelnen Nebenverbraucher (4, 5, 6, 7) mit der elektrischen Antriebsmaschine (8) oder dem als Fahrmotor fungierenden Elektromotor (3); **gekennzeichnet durch** die folgenden Merkmale:
die Mittel zur wahlweisen Kopplung der einzelnen Nebenverbraucher (4, 5, 6, 7) mit der elektrischen Maschine (8) oder dem als Fahrmotor fungierenden Elektromotor (3) umfassen wenigstens eine Getriebebaueinheit (11), umfassend wenigstens zwei Eingänge - einen ersten Eingang (12) und einen zweiten Eingang (16), wobei jeweils ein Eingang mit der Antriebswelle (14) des Elektromotors (3) und der andere Eingang mit der Antriebswelle (15) der elektrischen Maschine (8) drehfest verbindbar sind;
die Getriebebaueinheit (11) ist über eine Verteilergetriebeeinheit (9), umfassend wenigstens einen Ausgang (13.1, 13.2, 13.3, 13.4) jeweils mit einem Nebenverbraucher (4, 5, 6, 7) wenigstens mittelbar drehfest verbindbar,
die Mittel (10) umfassen Einrichtungen (17, 18) zur Lösung oder Herstellung einer Verbindung zwischen der Antriebswelle (15) der elektrischen Maschine (8) und der Verteilergetriebeeinheit (10) und eine Einrichtung (18) zur Lösung oder Herstellung der Verbindung zwischen der Antriebswelle (14) des als Fahrmotor fungierenden Elektromotors (3) der Verteilergetriebeeinheit (10);
die Einrichtungen (17, 18) zur Lösung oder Herstellung der Verbindung zwischen der Antriebswelle (15) der elektrischen Maschine (8) und der Verteilergetriebeeinheit (10) bzw. zwischen der Antriebswelle (14) des Elektromotors (3) und dem Eingang (11) der Verteilergetriebeeinheit (10) sind jeweils als Kupplungseinrichtung ausgeführt, wobei
die beiden Kupplungseinrichtungen in einer Doppelkupplung (21) integriert sind.

5. Antriebssystem nach Anspruch 4, **dadurch gekennzeichnet, daß** jedem Nebenverbraucher (4, 5, 6, 7) ein Ausgang (13.1, 13.2, 13.3, 13.4) an der Verteilergetriebeeinheit (10) zugeordnet ist.

6. Antriebssystem (1) nach einem der Ansprüche 4 oder 5, **gekennzeichnet durch** die folgenden Merkmale:
mit einer Steuervorrichtung, umfassend wenigstens eine Steuereinrichtung, insbesondere elektronische Steuereinrichtung, umfassend wenigstens einen Eingang und wenigstens einem Ausgang;
der Eingang ist wenigstens mittelbar mit einer Einrichtung zur Erfassung einer den Fahrerwunsch nach einer bestimmten Fahrgeschwindigkeit und damit an den Rädern erforderlichen abzugebenden Leistungen wenigstens mittelbar charakterisierenden Größe koppelbar;
der Ausgang (24, 25) sind mit einer Stelleinrichtung (22) zur Betätigung der Einrichtungen (17, 18) zur Lösung oder Herstellung der Verbindung zwischen der Antriebswelle (15) der elektrischen Maschine (8) und dem zweiten Eingang (16) der Getriebebaueinheit (11) bzw. zwischen der Antriebswelle (14) des Elektromotors (3) und dem ersten Eingang (12) der Getriebebaueinheit (11) verbunden.

7. Antriebssystem (1) nach Anspruch 6, **gekennzeichnet durch** die folgenden Merkmale:
die Steuereinrichtung umfasst eine Einrichtung zur Bildung der an den Rädern zu einem bestimmten Zeitpunkt erforderlichen abzugebenden Leistung;
mit einer Einrichtung zur Bildung eines theoretischen Wertes für die von den einzelnen Nebenverbrauchern (4, 5, 6, 7) erforderliche Leistung zu einem bestimmten Zeitpunkt;
mit einer Einrichtung zur Bildung der Summe aus den Werten für die theoretisch an den einzelnen Rädern erforderliche abzustellende Leistung und der von den Nebenverbrauchern theoretisch benötigten Leistung zu einem bestimmten Zeitpunkt;
mit einer Vergleichseinrichtung zum Vergleich der ermittelten Summe mit der theoretisch zu diesem Zeitpunkt erzeugbaren Gesamtantriebsleistung des Elektromotors (3);
mit einer mit der Vergleichseinrichtung gekoppelten Stellgrößenbildungseinrichtung, welche die Stellgrößen zur Ansteuerung der die Verbindung zwischen den Nebenverbrauchem (4, 5, 6, 7) und dem Elektromotor (3) oder der elektrischen Maschine (8) steuert.

8. Antriebssystem (1) nach Anspruch 7, **dadurch gekennzeichnet, daß** die Summe der von den Nebenverbrauchern erforderlichen Leistung ein Fixwert ist, welcher die erforderliche elektrische Leistung bei Inbetriebnahme aller Nebenaggregate (4, 5, 6, 7) beschreibt.

9. Antriebssystem (1) nach einem der Ansprüche 7 oder 8, **dadurch gekennzeichnet, daß** nur die zum ausgewählten Zeitpunkt in Betrieb befindlichen Nebenverbraucher (4, 5, 6, 7) berücksichtigt werden.

10. Antriebssystem (1) nach einem der Ansprüche 4 bis 9 **dadurch gekennzeichnet, daß** die elektrische Antriebsmaschine (8) als Komutatormaschine ausgeführt ist.

11. Antriebssystem (1) nach einem der Ansprüche 4 bis 10, **dadurch gekennzeichnet, daß** der Elektromotor (3) als Transversalflußmaschine ausgeführt ist.

12. Antriebssystem nach einem der Ansprüche 4 bis 11, **dadurch gekennzeichnet, daß** die Verteilergetriebeeinheit (10) in der Getriebebaueinheit (11) integriert ist bzw. mit dieser zu einer baulichen Einheit zusammengefaßt ist.

## Claims

1. A method for providing power to secondary consumers (4, 5, 6, 7) in a drive system (1) for use in vehicles, comprising at least one electromotor (3) which acts as a drive motor for driving at least indirectly at least one wheel, which electromotor can be coupled at least indirectly with a power source (2), and an electric machine (8) which can be coupled with the secondary consumers (4, 5, 6, 7), **characterized by** the following features:
the provision of power for the secondary consumers (4, 5, 6, 7) occurs depending on the power to be taken off at a certain time from the wheels; the secondary consumers (4, 5, 6, 7) are driven via the electric drive motor (8) only during the standstill of the motor vehicle or in an operating state in which at a certain time the sum total of the power to be taken off as theoretically demanded from the wheels and the power demanded at this time from the secondary consumers (4, 5, 6, 7) in operation is larger than the total power to be generated theoretically at this time by the electromotor (3) which acts as the drive motor;
the consideration of the power demanded by the secondary consumers (4, 5, 6 ,7) occurs in such a way that a fixed value is formed for the required power for driving all secondary consumers (4, 5, 6 ,7) which applies to each point in time of evaluation.

2. A method according to claim 1, **characterized by** the following features:
in which at the specific point in time at least one variable is determined which characterizes at least indirectly the current driver's wish for a power to be delivered to the wheels and from which the power to be provided theoretically for this purpose is formed by the electromotor (3) acting as drive motor;
in which a variable each is detected which characterizes at least indirectly the desired operating state of a secondary consumer (4, 5, 6 ,7) and from which the power is determined which is theoretically required for driving said secondary consumer;
in which the sum total of the power to be provided at the specific point in time and required on the wheels and the power to be provided which is required theoretically for driving every single secondary consumer (4, 5, 6 ,7) is formed into a theoretically required total power and is compared with the power supplied at most at this specific point in time of the electromotor (3) acting as drive motor.

3. A method according to one of the claims 1 or 2, **characterized in that** the operating mode of every single secondary consumer (4, 5, 6 ,7) is monitored continuously.

4. A drive system (1) for driving at least one wheel for use in vehicles;
with an electromotor (3) which is connected at least indirectly with at least one wheel to be driven and which can be coupled at least indirectly with a power source (2);
with at least one secondary consumer (4, 5, 6 ,7);
with at least one electric drive machine (8) which can be connected at least indirectly with the individual secondary consumers (4, 5, 6, 7);
with means (10) for optional coupling of the individual secondary consumers (4, 5, 6 ,7) with the electric drive machine (8) or the electromotor (3) acting as drive motor;
**characterized by** the following features:
the means for optional coupling of the individual secondary consumers (4, 5, 6 ,7) with the electric machine (8) or the electromotor (3) acting as drive motor comprise at least one transmission module (1), comprising at least two inputs, a first input (12) and a second input (16), with one input each being connectable in a torsionally rigid manner with the drive shaft (14) of the electromotor (3) and the other input with the drive shaft (15) of the electric machine (8);
the transmission module (11) can be connected at least indirectly in a torsionally rigid manner with a secondary consumer (4, 5, 6, 7) each via a power take-off gear unit (9) comprising at least one output (13.1, 13.2, 13.3, 13.4);
the means (10) comprise devices (17, 18) for detaching or producing a connection between the drive shaft (15) of the electric machine (8) and the power take-off gear unit (10) and a device (18) for detaching or producing the connection between the drive shaft (14) of the electromotor (3) acting as the drive motor of the power take-off gear unit (10);
the devices (17, 18) for detaching or producing the connection between the drive shaft (15) of the electric machine (8) and the power take-off gear unit (10) and between the drive shaft (14) of the electromotor (3) and the input (11) of the power take-off gear unit (10) are each arranged as a coupling device, with the two coupling devices being integrated in a double coupling (21).

5. A drive system according to claim 4, **characterized in that** each secondary consumer (4, 5, 6 ,7) is associated with an output (13.1, 13.2, 13.3, 13.4) in the power take-off gear unit (10).

6. A drive system (1) according to one of the claims 4 or 5, **characterized by** the following features:
with a control apparatus, comprising at least one control device, especially an electronic control device, comprising at least one input and at least one output;
the input can be coupled at least indirectly with a device for detecting a variable characterizing the driver's wish for a specific speed and thus power to be delivered as required on the wheel;
the output (24, 25) is connected with an actuating device (22) for actuating the devices (17, 18) for detaching or producing the connection between the drive shaft (15) of the electric machine (8) and the second input (16) of the transmission module (11) or between the drive shaft (14) of the
electromotor (3) and the first input (12) of the transmission module (11).

7. A drive system (1) according to claim 6, **characterized by** the following features:
the control device comprises a device for forming the power to be provided to the wheels as required at a certain point in time;
with a device for forming a theoretical value for the power required by the individual secondary consumers (4, 5, 6, 7) at a certain point in time;
with a device for forming the sum total from the values for the power to be provided as required theoretically in the individual wheels and the power as theoretically required by the secondary consumers at a certain point in time; with a comparing device for comparing the determined sum total with the total drive power of the electromotor (3) which can be generated theoretically at this point in time;
with a device for forming an actuating variable which is coupled with the comparing device and which controls the actuating variables for triggering the connection between the secondary consumers (4, 5, 6, 7) and the electromotor (3) or the electric machine (8).

8. A drive system (1) according to claim 7, **characterized in that** the sum total of the power required by the secondary consumers is a fixed value which describes the required electric power when all secondary consumers (4, 5, 6, 7) are put into operation.

9. A drive system (1) according to one of the claims 7 or 8, **characterized in that** only the secondary consumers (4, 5, 6, 7) are considered which are in operation at the selected point in time.

10. A drive system (1) according to one of the claims 4 to 9, **characterized in that** the electric drive machine (8) is arranged as a commutator machine.

11. A drive system (1) according to one of the claims 4 to 10, **characterized in that** the electromotor (3) is arranged as a transverse-flux machine.

12. A drive system (1) according to one of the claims 4 to 11, **characterized in that** the power take-off gear (10) is integrated in the transmission module (11) or is combined with the same into a modular unit.

## Revendications

1. Procédé pour fournir de la puissance à des consommateurs secondaires (4, 5, 6, 7) dans un système de propulsion (1) destiné à être utilisé dans des véhicules, comprenant au moins un moteur électrique (3) servant de moteur de propulsion pour l'entraînement au moins indirect d'au moins une roue, qui peut être couplé au moins indirectement à une source d'énergie (2), et une machine électrique (8) qui peut être couplée aux consommateurs secondaires (4, 5, 6, 7), **caractérisé en ce que** :
la fourniture de puissance pour les consommateurs secondaires (4, 5, 6, 7) dépend de la puissance qui doit être absorbée à un moment donné au niveau des roues ;
les consommateurs secondaires (4, 5, 6, 7) ne sont entraînés par la machine électrique (8) qu'à l'arrêt du véhicule ou dans un état de fonctionnement dans lequel, à un moment donné, la somme de la puissance demandée théoriquement aux roues et de la puissance demandée par les consommateurs secondaires (4, 5, 6, 7) en service à ce moment est supérieure à la puissance totale pouvant être fournie théoriquement à ce moment par le moteur électrique (3) servant de moteur de propulsion ;
la puissance demandée par les consommateurs secondaires (4, 5, 6, 7) est prise en compte en formant une valeur fixe de puissance nécessaire pour l'entraînement de tous les consommateurs secondaires (4, 5, 6, 7) qui est valable à tout moment de l'évaluation.

2. Procédé selon la revendication 1, **caractérisé en ce que** :
dans lequel au moment donné au moins une grandeur caractérisant au moins indirectement l'ordre actuel du conducteur concernant la puissance à transmettre aux roues est déterminée et la puissance à fournir théoriquement à cette fin par le moteur électrique (3) servant de moteur de propulsion est constituée ;
dans lequel une grandeur caractérisant au moins indirectement l'état de fonctionnement souhaité d'un consommateurs secondaires (4, 5, 6, 7) est captée et la puissance théoriquement nécessaire à l'entraînement de ces consommateurs secondaires est déterminée à partir de celle-ci ;
dans lequel la somme de la puissance nécessaire à fournir aux roues au moment donné et de la puissance nécessaire à fournir théoriquement pour l'entraînement de chaque consommateur secondaire (4, 5, 6, 7) est formée pour obtenir une puissance totale nécessaire théorique et comparée à la puissance maximale que peut délivrer le moteur électrique (3) servant de moteur de propulsion à ce moment donné.

3. Procédé selon l'une des revendications 1 ou 2, **caractérisé en ce que** le mode de fonctionnement de chaque consommateur secondaires (4, 5, 6, 7) est surveillé de façon continue.

4. Système de propulsion (1) pour l'entraînement d'au moins une roue destiné à être utilisé dans des véhicules,
avec un moteur électrique (3) relié au moins indirectement à au moins une roue à entraîner, qui peut être couplé au moins indirectement à une source d'énergie (2) ;
avec au moins un consommateur secondaire (4, 5, 6, 7);
avec au moins une machine d'entraînement électrique (8), qui peut être reliée au moins indirectement aux différents consommateurs secondaires (4, 5, 6, 7) ;
avec des moyens (10) pour le couplage sélectif des différents consommateurs secondaires (4, 5, 6, 7) avec la machine d'entraînement électrique (8) ou le moteur électrique (3) servant de moteur de propulsion ;
**caractérisé en ce que** :
les moyens pour le couplage sélectif des différents consommateurs secondaires (4, 5, 6, 7) avec la machine électrique (8) ou le moteur électrique (3) servant de moteur de propulsion comprennent au moins une unité d'engrenages (11), comprenant au moins deux entrées, une première entrée (12) et une deuxième entrée (16), une entrée pouvant être reliée de manière solidaire en rotation à l'arbre d'entraînement (14) du moteur électrique (3) et l'autre entrée avec l'arbre d'entraînement (15) de la machine électrique (8) ;
l'unité d'engrenages (11) peut être reliée au moins indirectement de manière solidaire en rotation par une unité d'engrenage de distribution (9) comprenant au moins une sortie (13.1, 13.2, 13.3, 13.4) à un consommateur secondaire (4, 5, 6, 7) ;
les moyens (10) comprennent des dispositifs (17, 18) pour défaire ou créer une liaison entre l'arbre d'entraînement (15) de la machine électrique (8) et
l'unité d'engrenage de distribution (10) et un dispositif (18) pour défaire ou créer la liaison entre l'arbre d'entraînement (14) du moteur électrique (3) servant de moteur de propulsion et l'unité d'engrenage de distribution (10) ; les dispositifs (17, 18) pour défaire ou créer la liaison entre l'arbre d'entraînement (15) de la machine électrique (8) et l'unité d'engrenage de distribution (10) ou entre l'arbre d'entraînement (14) du moteur électrique (3) et l'entrée (11) de l'unité d'engrenage de distribution (10) sont construits chacun comme un dispositif d'embrayage les deux dispositifs d'embrayage étant intégrés dans un double embrayage (21).

5. Système de propulsion selon la revendication 4, **caractérisé en ce que** chaque consommateur secondaire (4, 5, 6, 7) est associé à une sortie (13.1, 13.2, 13.3, 13.4) de l'unité d'engrenage de distribution (10).

6. Système de propulsion (1) selon l'une des revendications 4 ou 5,
**caractérisé en ce que** :
il est prévu une unité de commande, comprenant au moins un dispositif de commande, en particulier un dispositif de commande électronique, ayant au moins une entrée et au moins une sortie ;
l'entrée peut être couplée au moins indirectement avec un dispositif pour déterminer une grandeur caractérisant au moins indirectement l'ordre du conducteur pour une vitesse de marche donnée et ainsi la puissance nécessaire à délivrer au niveau des roues ;
la sortie (24, 25) est reliée à un dispositif de réglage (22) pour actionner les dispositifs (17, 18) pour défaire ou créer la liaison entre l'arbre d'entraînement (15) de la machine électrique (8) et la deuxième entrée (16) de l'unité d'engrenages (11) ou entre l'arbre d'entraînement (14) du moteur électrique (3) et la première entrée (12) de l'unité d'engrenages (11).

7. Système de propulsion (1) selon la revendication 6, **caractérisé en ce que** :
le dispositif de commande comprend un dispositif pour constituer la puissance nécessaire à fournir aux roues à un moment donné ;
avec un dispositif pour former une valeur théorique de la puissance nécessaire aux différents consommateurs secondaires (4, 5, 6, 7) à un moment donné ;
avec un dispositif pour former la somme des valeurs de la puissance théoriquement nécessaire à fournir à chaque roue et de la puissance théoriquement nécessaire pour les consommateurs secondaires à un moment donné ;
avec un dispositif comparateur pour comparer la somme déterminée à la puissance d'entraînement totale pouvant être produite à ce moment donné par le moteur électrique (3) ;
avec un dispositif de calcul de grandeurs de réglage couplé au dispositif comparateur, qui régule les grandeurs de réglage pour la commande de la communication entre les consommateurs secondaires (4, 5, 6, 7) et le moteur électrique (3) ou la machine électrique (8).

8. Système de propulsion (1) selon la revendication 7, **caractérisé en ce que** la somme de la puissance nécessaire aux consommateurs secondaires est une valeur fixe qui décrit la puissance électrique nécessaire lors de la mise en service de tous les groupes secondaires (4, 5, 6, 7).

9. Système de propulsion (1) selon l'une des revendications 7 ou 8, **caractérisé en ce que** seuls les consommateurs secondaires (4, 5, 6, 7) en fonctionnement au moment choisi sont pris en compte.

10. Système de propulsion (1) selon l'une des revendications 4 à 9, **caractérisé en ce que** la machine d'entraînement électrique (8) est réalisée comme une machine à collecteurs.

11. Système de propulsion (1) selon l'une des revendications 4 à 10, **caractérisé en ce que** le moteur électrique (3) est construit comme une machine à flux transversal.

12. Système de propulsion selon l'une des revendications 4 à 11, **caractérisé en ce que** l'unité d'engrenage de distribution (10) est intégrée dans l'unité d'engrenages (11) ou rassemblée avec celle-ci dans une unité de construction.
